# EUROPÄISCHE PATENTSCHRIFT

(11) **EP 2 055 404 B1**
(45) Veröffentlichungstag und Bekanntmachung des Hinweises auf die Patenterteilung: **05.05.2010**
(21) Anmeldenummer: 08167477.2
(22) Anmeldetag: 24.10.2008
(51) Int. Cl.: B21D 13/04, B21D 13/10, E04C 2/32, B65D 90/50

(54) **Noppenfolie sowei Verfahren zur Herstellung derselben**
Embossed panel and method for producing the same
Feuille à protubérances et son procédé de fabrication

(30) Priorität: 29.10.2007 CH 16862007
(43) Veröffentlichungstag der Anmeldung: 06.05.2009
(73) Patentinhaber: OnO Waterprotection GmbH, 6020 Innsbruck (AT)
(72) Erfinder: Bachmann, Werner, 6275 Ballwil (CH)
(74) Vertreter: Dr. Graf & Partner

(56) Entgegenhaltungen:
- EP-A- 1 609 587
- EP-B- 0 879 103
- EP-B- 1 373 075
- DE-A1- 19 950 466
- DE-C- 826 636
- GB-A- 2 385 816

## Beschreibung

Die Erfindung betrifft eine Noppenfolie für die Leckschutzauskleidung von Tanks zum Erreichen eines doppelwandigen Tanks, gemäß dem Oberbegriff des Anspruchs 1 (siehe z.B. EP-B-0 879 103).

Die Erfindung betrifft insbesondere ein Tank mit einer Leckschutzauskleidung, welche Leckschutzauskleidung eine Noppenfolie gemäß der Erfindung umfasst, die mit einer mit einem Gewebe bewehrten Kunstharzschicht beschichtet ist.

Außerdem betrifft die Erfindung ein Verfahren zur Herstellung einer Noppenfolie gemäß dem Oberbegriff des Anspruchs 12.

Aufgabe von Leckschutzauskleidungen von Tanks ist, einen überwachbaren Hohlraum zwischen einer inneren dichten Wandung und einer äusseren dichten Wandung herzustellen. Dieser Hohlraum kann, dank der Dichtheit der ihn bildenden Wandungen, z.B. mit Vakuum überprüft werden.

Solche Auskleidungsmaterialien müssen aber nicht nur diese Aufgabe erfüllen können, sondern sollen bei der Verarbeitung einfach zu handhaben sein.

Es ist deshalb Aufgabe der Erfindung, eine Noppenfolie zu schaffen, die in alle Richtungen eine für die Verarbeitung geeignete, gleichmässige Biegesteifigkeit aufweist. Der Hohlraum, der zwischen der Folie und einer glatten Wandung entsteht, soll möglichst geringe Durchströmungswiderstände aufweisen und ein möglichst geringes Volumen aufweisen. Weiter soll die mit bewehrtem Kunststoff beschichtete Rückseite der Folie möglichst gewebefreundlich sein. Die Folie soll deshalb beim Biegen des Auskleidungsmaterials keine Kanten bilden, sondern sie soll in beliebiger Richtung in gleichmässigem Radius gebogen werden können.

Diese Aufgabe wird erfindungsgemäss gelöst durch eine Noppenfolie mit den Merkmalen des unabhängigen Anspruchs 1, durch einen Tank mit den Merkmalen des unabhängigen Anspruchs 9, sowie durch ein Verfahren zur Herstellung einer solchen Noppenfolie mit den Merkmalen des unabhängigen Anspruchs 12.

Die erfindungsgemässe Ausgestaltung der Folie wurde zufällig gefunden. Es wurde eine Alufolie mittels Walzen geformt. Die Walzen tragen, die eine negativ und die andere positiv, eine räumliche Struktur in einem Quadratraster. Jedes Rasterquadrat bildet einen Pyramidenstumpf mit scharfen Kanten. Der Quadratraster hat etwa 6.6 mm Seitenlänge, und die Deckfläche des Pyramidenstumpfs in der positiven Form hat etwa 1,5 mm Seitenlänge. Eine mit diesen Walzen zuerst produzierte Folie wurde mit hohem Anpressdruck produziert, so dass die durch die Walzen vorgegebene Form vollständig abgebildet wurde. Die scharfkantigen Pyramiden hatten scharfkantige Täler zwischen sich. Auf der Seite der Folie mit konkaven Pyramidenstumpfen wurde eine textil bewehrte Kunststoffschicht aufgetragen, um ein Auskleidungsmaterial für Tankinnenraumauskleidungen zu erreichen. Auf der konvexen Seite der Täler ergab dies beim Biegen des so ausgebildeten Auskleidungsmaterials eine hohe Belastung der darüber liegenden Kunststoffbeschichtung und des Gewebes. Zudem knickte die Folie entlang der Talsohle.

Eine mit den selben Walzen danach produzierte Folie erwies sich indes überraschenderweise als für den gewünschten Zweck äusserst geeignet. Sie wurde mit reduziertem Anpressdruck produziert. Die Form, die die Folie dabei annahm, kann wie folgt beschrieben werden.

Die Folie wurde zwischen den Deckflächen der positiven Pyramidenstumpfe und dem Quadratraster der Täler gezogen. Es entstand dabei eine abgerundete Form von Pyramidenstumpfen. Die Deckflächen sind deutlich ausgebildet, wenn auch leicht gewölbt. Die Seitenflächen der Pyramidenstumpfe sind übergehend von einer eher kantigen Ausbildung der Pyramidenkanten und einer nur leichten Wölbung der Seiten im Anschluss an die Deckfläche zu einer einem Kreis angenäherten Form an der Pyramidenbasis. In einem Schnitt entlang einer schräg zum Raster verlaufenden Falllinie einer Seitenfläche des Pyramidenstumpfs nimmt die Neigung der Seitenfläche von der Deckfläche zur Talsohle leicht ab. Die Talsohle besitzt in einer die Talsohle normal schneidenden Schnittebene zwischen zwei benachbarten Deckflächen einen kleinen Radius von weniger als 1 mm. In einer das Tal in den Talkreuzungen schneidenden Schnittebene, die mit 45° zu dem Quadratraster verläuft, ist der Radius der Talsohle in der Grössenordnung von 4 mm. Entsprechend sind an den Talkreuzungen annähernd ebenflächige Bereiche ausgebildet, welche einem mit den Ecken auf dem Quadratraster liegenden Quadrat angenähert sind und eine Seitenlänge von 2 bis 3 mm aufweisen.

Die Talsohle ist indes nicht eben verlaufend oder gestreckt ausgebildet. Die erwähnten nahezu ebenflächigen Bereiche in den Talkreuzungen sind erstaunlicherweise in Richtung Talsohle nicht so tief gepresst wie die Bereiche der Täler mit geringerem Talsohlenradius. Folgt man daher einer Talsohle ergibt diese Bewegung eine Wellenbewegung, die an den Talkreuzungen einen Höhepunkt und mittig zwischen den Talkreuzungen jeweils einen Tiefpunkt hat. Es wird angenommen, dass diese Ausformung der Talsohle davon rührt, dass eine der beiden den Quadratraster der Täler formenden Kanten auf der einen Walze den Walzenradius aufweist. Dieser Radius ist im Bereich des Tales mit geringem Sohlenradius abgebildet, während beim Flachbiegen der geprägten Folie dieser Prägeradius sich mit zunehmendem Sohlenradius leichter aufweiten lässt. Bei einem solchen Flachbiegen wird erstaunlicherweise die Sohle desjenigen Tals wellig geformt, das durch die Prägewalze geradlinig geprägt wurde. Die Wellenform hat indes eine geringere Amplitude.

In der diagonalen Richtung zum Kreuzraster ergibt sich beim Prägen der Folie eine geringere Streckung des Folienmaterials als in Richtung parallel zum Kreuzraster auf einer Linie durch die Deckflächen der Noppen und durch die Talsohlen-Tiefpunkte. Dies, so wird angenommen, wirkt sich auf die Verformung der Folie in den Talkreuzungen aus, so dass diese Kreuzungsbereiche gegenüber den übrigen Bereichen der Talsohle angehoben sind.

Es wird vom Anmelder angenommen, dass gerade diese Radiusschwankungen des Talsohlenradius und die Abweichung von der Geradlinigkeit der Talsohle die gleichmässige Biegesteifigkeit der Folie hervorbringen. Zudem ist dank den runden Formen des durch die Täler gebildeten Hohlraums zwischen einer Tankwandung und der erfindungsgemässen Folie ein geringer Durchströmungswiderstand erreicht. Dank dem die Formhöhe der Folie geringer ist als die Höhe der Pyramidenstumpfe der formgebenden Walzen ist auch eine Reduktion des Volumens des Hohlraums gegenüber der scharfkantig geprägten Pyramidenstumpf-Folie erreicht worden.

Verallgemeinert ist daher die Aufgabe der Erfindung durch eine Noppenfolie gelöst, die folgende Eigenschaften aufweist:

Die Noppenfolie besitzt sich kreuzende Reihen von Noppen und zwischen den Reihen ein Kreuzraster von Tälern. Die Talsohle besitzt in Längserstreckung des Tales eine Wellenform, die an den Talkreuzungen einen Höhepunkt und zwischen diesen Talkreuzungen eine Tiefpunkt besitzt.

Diese Wellenform der Talsohle verhindert ein Knicken der Folie entlang der Talsohle beim Biegen der Sohle um eine Achse parallel zur Talsohle.

Vorteilhaft weist die Talsohle an den Talkreuzungen einen grösseren Talsohlenradius auf als zwischen den Talkreuzungen. Der zu den Talkreuzungen sich aufweitende Sohlenradius schafft die Voraussetzung, dass die Folie um eine Biegeachse, die diagonal zum Kreuzraster verläuft, ebenso biegsam ist wie um eine Biegeachse, die parallel zum Kreuzraster verläuft. Die Aufweitung des Sohlenradius in den Höhepunkten der Talsohle versteift einerseits die Folie bezüglich einer Biegung um eine Biegeachse, die parallel zum Tal verläuft. Sie verringert andererseits den Widerstand der Folie gegen eine Biegung um eine diagonal zum Tal verlaufende Biegeachse.

Die Noppen können halbkugelähnlich, oder kegelstumpfähnlich ausgebildet sein. Bevorzugt wird eine pyramidenstumpfähnliche Ausformung der Noppen. Die Noppenfolie bildet jeweils die Deckfläche, die Pyramidenkanten und die Seitenflächen der Pyramidenstumpfe und damit auch das Kreuzraster der Täler. Die Pyramidenkanten weisen an der Basis der Pyramidenstumpfe vorteilhaft einen Radius von wenigstens 1/5 des Rastermasses des Kreuzrasters auf. Dies ermöglicht die gewünschte Ausbildung der Folie in den Kreuzungspunkten der Täler. Diese Angabe ist indes nicht als genaue geometrische Angabe zu verstehen, da die Folie dreidimensionale Formen besitzt, die nicht mit einfachen und exakten geometrischen Merkmalen beschrieben werden können.

Der Radius der Pyramidenkanten im Bereich der Basis der Pyramidenstumpfe weist vorzugsweise zwischen 1/5 und 2/5 des Rastermasses auf. Dies führt einerseits zu einer deutlichen Talbildung im Bereich der verbleibenden 1 bis 3 Fünftel des Rastermasses, andererseits zu einer gewünschten Aufweitung der Talkreuzungen.

Die dreidimensionale Gestaltung der Folie ist keineswegs durch linear definierbare Querschnitte geprägt. In einem Querschnitt diagonal zum Kreuzraster und durch die Kreuzungsstellen des Kreuzrasters folgt die Schnittfläche der Noppenfolie vorzugsweise viel mehr einer nichtlinearen Funktionskurve. Diese Funktionskurve bildet an der Kreuzungsstelle einen Scheitelpunkt. Die damit beschriebenen "weichen Formen" der Noppenfolie haben zur Folge, dass auch das Biegeverhalten der Folie keine ausgeprägten Richtungen besitzt.

Während das Kreuzraster ein Dreiecksraster oder ein Rechtecksraster sein kann, so wird doch ein Quadratraster bevorzugt. Entsprechend ist es zweckmässig, die Deckfläche der pyramidenstumpfähnlichen Noppen quadratisch auszubilden.

Die Pyramidenkanten sind mit Vorteil angrenzend an die Deckfläche kantiger ausgebildet als angrenzend an die Basis der Pyramidenstumpfe. Dadurch wird die Form der Folie mit abnehmendem Abstand zur Deckfläche resistenter gegen Druck. Sie kann daher in eingebautem Zustand als zweite Schicht eines doppelwandigen Tanks grösseren Druckkräften standhalten. An den Stellen, an denen sich die Druckkräfte bei der eingebauten Folie konzentrieren, ist die Folie dank der kantigen Formgebung schlechter verformbar, weil die Kanten senkrecht zur Druckrichtung verlaufen.

Die Erfindung betrifft auch einen Tank gemäß Anspruch 9, der mit einer Leckschutzauskleidung auf der Innenseite einer äusseren Wandung versehen ist. Die Leckschutzauskleidung ist gebildet durch eine solche Noppenfolie, die mit den Deckfläche an der äusseren Wandung des Tanks anliegt und die mit einer textil bewehrten Kunstharzbeschichtung auf ihrer Innenseite ausgerüstet ist, auf welcher die Talsohle einen konvexen Grat bildet. Die Leckschutzauskleidung ist vorzugsweise mit einer textilen Bewehrung ausgerüstet, die aus einem mindestens 2-schichtigen Glasfasergewebe besteht.

Damit das Biegeverhalten dieses Auskleidungsmaterials optimal ist, wird bevorzugt, wenn die Fasern der ersten Schicht dieses Glasfasergewebes mit einer Schlichte, vorzugsweise einer Silan-Schlichte, behandelt sind, und die Fasern der zweiten Schicht unbehandelt sind. Dies ergibt unterschiedliche Haftungen zwischen dem Kunstharz und den beiden Glasfaserschichten, was sich auf das Biegeverhalten positiv auswirkt.

Eine solche Noppenfolie kann mit entsprechend geformten Prägewalzen und mit einem Prägedruck hergestellt werden, der die Folie vollflächig in Kontakt mit den beiden Walzen bringt. Bevorzugt wird indes, dass die Metallfolie mit einem Prägedruck zwischen den Walzen geprägt wird, der so bemessen ist, dass die Metallfolie während des gesamten Prägeprozesses in Abstand zur Talsohle der Täler in der einen Prägewalze bleibt.

Die Reduktion des Prägedrucks an sich ist vorteilhaft, weil damit der Folie nicht eine vorgegebene Form aufgezwungen wird, sondern die Folie mehr gezogen wird. Die Prägewalzen können dabei einfache Formen aufweisen. Von den beiden zusammenwirkenden Prägewalzen, mit denen die Folie geprägt wird, weist die erste Prägewalze positive pyramidenstumpfähnliche Erhöhungen auf, die in sich kreuzenden Reihen angeordnet sind und zwischen sich ein Kreuzraster von Tälern bilden. Diese Pyramidenstumpfe können ebenflächige Seitenflächen und Deckflächen aufweisen. Die Täler und Kanten können scharfkantig ausgebildet sein, was produktionstechnische Vorteile hat. Die zweite Prägewalze weist ein dem Kreuzraster der Täler entsprechendes Kreuzraster von Gräten auf. Auch diese Gräte können scharfkantig und gestreckt ausgebildet sein. Die komplizierte dreidimensionale Form ergibt sich dann automatisch beim Ziehen der Folie zwischen den so ausgeformten Walzen. Die Metallfolie wird durch die Gräte und die pyramidenstumpfähnlichen Erhöhungen dreidimensional gezogen und nimmt die beschriebene, dreidimensional geschwungene Form an.

### Kurzbeschreibung der Figuren:

Es zeigen:
- Fig. 1: eine schematische Aufsicht auf eine bevorzugte Noppenfolie mit Pyramidenkanten-Radien im Bereich von ca. 1/5 des Rastermasses.
- Fig. 2: eine schematische Aufsicht auf eine Noppenfolie mit Pyramidenkanten-Radien von gut 2/5 des Rastermasses.
- Fig. 3: eine schematische Aufsicht auf eine Noppenfolie mit Kreiskegelstumpfen als Noppen.
- Fig. 4: eine Aufsicht auf die Noppenfolie gemäss Fig. 1 mit Darstellung von Licht und Schatten, und Eintragung von Schnittlinien.
- Fig. 5: Schnitt entlang der Talsohle durch die Noppenfolie gemäss Figur 4 entlang der Linie V-V.
- Fig. 6: Schnitt durch die Noppenfolie gemäss Figur 4 entlang der Linie VI-VI diagonal zum Raster der Prägung.
- Fig. 7: Schnitt durch eine Tankwandung und das daran anliegende Auskleidungsmaterial mit einer Noppenfolie, einer Kunstharzbeschichtung und einer Gewebeeinlage in der Kunstharzbeschichtung.

### Detailbeschreibung der Figuren

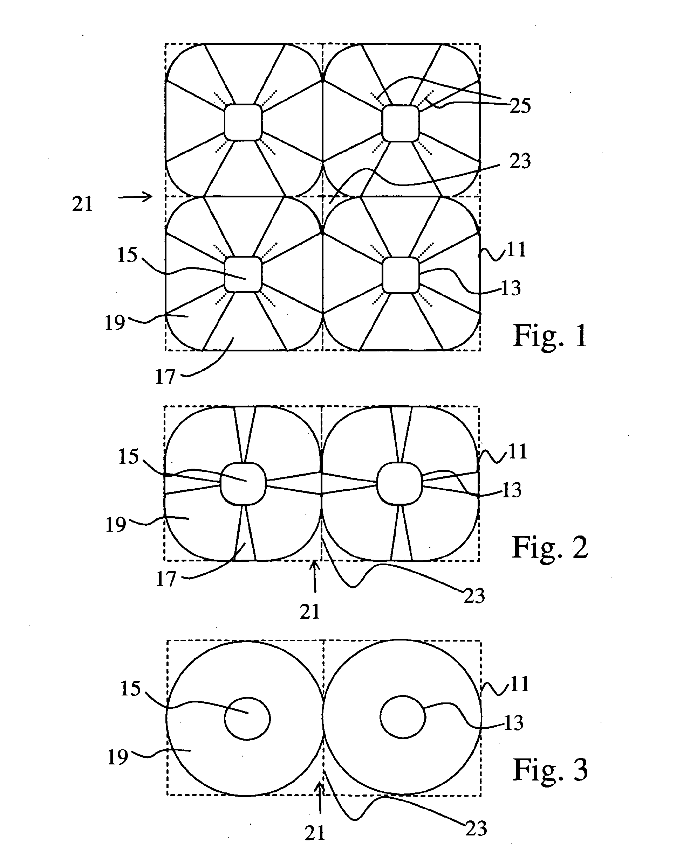

Die Figuren 1 bis 3 zeigen Aufsichten auf drei mögliche Noppenformen von Noppenfolie gemäss der Erfindung. Es gibt mehr mögliche Noppenformen, zumal es auch die Möglichkeit von Rechteckrastern und Dreieckrastern gibt. Die dargestellten Noppen sind in einem Quadratraster angeordnet, da dieser bevorzugt ist.

Mit 11 ist die Noppenfolie als Ganzes bezeichnet. Mit 13 ist die einzelne Noppe bezeichnet. 15 bezeichnet die Deckfläche der pyramidenstumpfähnlichen oder kegelstumpfähnlichen Noppe 13. 17 bezeichnet die Seitenfläche der pyramidenstumpfähnlichen Noppe. 19 bezeichnet die Kantenflächen der pyramidenstumpfähnlichen und die Mantelfläche der kegelstumpfähnlichen Noppe. Mit 21 ist ein Tal zwischen den Noppen 13 bezeichnet, mit 23 eine Talkreuzung. Mit 21 ist auch der Grat bezeichnet, der auf der Rückseite der Folie ausgebildet ist und dem Tal entspricht, und mit 23 ist deshalb auch die Gratkreuzung bezeichnet.

Bei den dargestellten Noppenfolien ist das Quadratraster mit unterbrochenen Linien eingezeichnet. Innerhalb jedes quadratischen Feldes des Quadratrasters ist eine Noppe ausgebildet. Diese Noppe 13 hat eine im Wesentlichen ebene Deckfläche 15 und eine Mantelfläche, bestehend aus Seitenflächen 17 und Kantenflächen 19, oder auch nur aus der kegelstumpfähnlichen Mantelfläche 19. Zwischen den Noppen 13 ist ein Netz von Tälern 21 ausgebildet, die sich in Talkreuzungen kreuzen, an welchen Talkreuzungen Kreuzungsbereiche ausgebildet sind. Diese Täler 21 sind in den dargestellten Fällen in einem bestimmten Abstand zueinander ausgebildet und stehen rechtwinklig und parallel zueinander. Der Abstand zwischen zwei parallelen Tälern ist 6.6mm.

Da die pyramidenstumpfähnlichen Noppen keine scharfen Kanten aufweisen, sondern deren "Kanten" einen von der Deckfläche zur Basis sich vergrössernden Radius aufweisen, ergeben sich an den Talkreuzungen Kreuzungsbereiche 23. Diese Kreuzungsbereiche 23 haben eine Ausdehnung, die bedeutend grösser ist als die Breite der Talsohle in den dazwischen liegenden Bereichen. Diese Kreuzungsbereiche 23 sind annähernd ebenflächig und haben eine Ausdehnung, die in etwa der Fläche der Deckfläche 15 entspricht.

Bei den Ausführungsbeispielen, die pyramidenstumpfähnliche Noppen aufweisen, kann die Kante der Noppe nahe der Deckfläche 15 kantig und erst anschliessend gerundet ausgebildet sein. Diese kantige Partie der Kante ist in Figur 1 als gepunkteter Strich dargestellt und mit 25 bezeichnet. Die Ausbildung einer Rundung mit geringem Radius oder einer Kante in Deckflächennähe hat den Vorteil, dass die Noppe dadurch verstärkt ist.

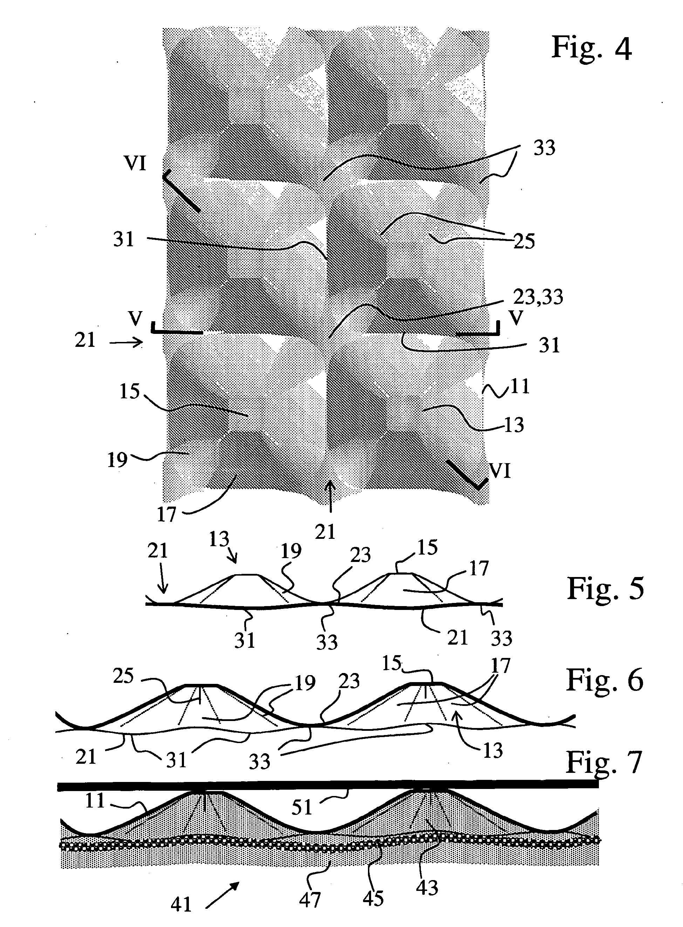

In Figur 4 ist die Noppenfolie als schattierte Zeichnung dargestellt. Das Licht kommt von oben rechts. Die Noppen 13 stehen also aus der Fläche vor. Die als scharfkantig dargestellten Übergänge zwischen Deckfläche 15 und Mantelfläche 17,19 wie auch zwischen Mantelfläche 17,19 und dem Kreuzungsbereich 23 sind in Wirklichkeit gerundet. Dies geht aus den Schnittzeichnungen gemäss Figuren 5 und 6 hervor.

In Figur 5 ist der Schnitt entlang der Linie V-V dargestellt. Diese Schnittlinie erstreckt sich entlang der Talsohle. In Ansicht sind die Noppen dargestellt, die dieses Tal begleiten.

Die Talsohle ist nicht gestreckt ausgebildet. Vielmehr besitzt sie Tiefpunkte 31 im Bereich, wo sich die Seitenflächen 17 der angrenzenden Pyramidenstumpfe annähern. Und sie besitzt Höhepunkte 33 auf den Kreuzungsbereichen 23, die an die Kantenflächen 19 angrenzen.

Im Schnitt durch die Kantenflächen 19, also diagonal zu dem Quadratraster und durch die Deckflächen 15 und die Kreuzungsbereiche 23 (Fig. 6, Linie VI-VI), folgt die Schnittfläche der Noppenfolie zwischen zwei Deckflächen 15 in Annäherung einer Hyperbel- oder Parabelfunktion. Der Scheitelpunkt dieser Funktion liegt im Kreuzungsbereich und fällt zusammen mit dem Höhepunkt 33 der Talsohlenschnittlinie. Mit 33 ist aus diesem Grund auch dieser Scheitelpunkt bezeichnet.

Die Höhendifferenz zwischen dem Höhepunkt und dem Tiefpunkt der Wellenform der Talsohle beträgt lediglich 0,05 bis 0,15 mm. Die Wellenform kann unter Umständen lediglich in den parallelen Tälern einer einzigen Richtung ausgebildet sein. Bevorzugt ist sie in jedem Tal ausgebildet, wenn auch mit unterschiedlicher Amplitude.

In Figur 7 ist schliesslich eine Tankwandung mit dem daran anliegenden Auskleidungsmaterial dargestellt. Das Auskleidungsmaterial ist mit einer solchen Noppenfolie gebildet. Dieses Auskleidungsmaterial 41 hat wenigstens vier Schichten, nämlich: Die Noppenfolie 11 (in aller Regel aus Aluminium), eine erste Kunstharzschicht 43 (mit welcher die Hohlräume in den Noppen 13 gefüllt sind), eine Glasfaserbewehrung 45 aus einem Zweischichtgewebe, und schliesslich eine Deckschicht 47 aus dem selben Kunstharz wie die erste Kunstharzschicht.

Bei dem Zweischichtgewebe sind beide Schichten miteinander verwoben, jedoch gegeneinander innerhalb von Grenzen verschieblich. Eine der beiden Schichten ist geschlichtet, die andere nicht.

Als Kunstharz werden die für diese Anwendungen üblichen Kunstharze verwendet.

## Patentansprüche

1. Noppenfolie (11) mit sich kreuzenden Reihen von Noppen (13) und zwischen den Reihen einem Kreuzraster von Tälern (21), **dadurch gekennzeichnet, dass** die Talsohle wenigstens der in eine Richtung gerichteten Täler in Längserstreckung des Tales (21) eine Wellenform besitzt, die an den Talkreuzungen (23) einen Höhepunkt (33) und zwischen diesen Talkreuzungen eine Tiefpunkt (31) besitzt.

2. Noppenfolie nach Anspruch 1, **dadurch gekennzeichnet, dass** die Talsohle an den Talkreuzungen (23) einen grösseren Talsohlenradius aufweist als zwischen den Talkreuzungen (23).

3. Noppenfolie nach Anspruch 1 oder 2, **dadurch gekennzeichnet, dass** die Noppen (13) pyramidenstumpfähnlich sind, die Noppenfolie (11) jeweils die Deckfläche (15), die Pyramidenkanten (19) und die Seitenflächen (17) und damit auch das Kreuzraster der Täler (21) bildet, und dass die Pyramidenkanten (19) an der Basis der Pyramidenstumpfe einen Kantenradius von wenigstens 1/5 des Rastermasses des Kreuzrasters aufweisen.

4. Noppenfolie nach Anspruch 3, **dadurch gekennzeichnet, dass** dass der Kantenradius zwischen 1/5 und 2/5 des Rastermasses aufweist.

5. Noppenfolie nach einem der Ansprüche 1 bis 4, **dadurch gekennzeichnet, dass** in einem Querschnitt diagonal zum Kreuzraster und durch die Kreuzungsstellen (23) des Kreuzrasters die Schnittfläche der Noppenfolie (11) einer nichtlinearen Funktionskurve folgt, welche Funktionskurve an der Kreuzungsstelle (23) einen Scheitelpunkt (33) bildet.

6. Noppenfolie nach einem der Ansprüche 1 bis 5, **dadurch gekennzeichnet, dass** die Deckfläche (15) quadratisch ist.

7. Noppenfolie nach einem der Ansprüche 1 bis 6, **dadurch gekennzeichnet, dass** das Kreuzraster ein Quadratraster ist.

8. Noppenfolie nach einem der Ansprüche 1 bis 7, **dadurch gekennzeichnet, dass** die Pyramidenkanten (19) angrenzend an die Deckfläche (19) kantiger ausgebildet sind als angrenzend an die Basis der Pyramidenstumpfe.

9. Tank mit einer äusseren Wandung (51) und einer Tankinnenraumauskleidung, welche Tankinnenraumauskleidung eine Noppenfolie (11) gemäss einem der vorangehenden Ansprüche und eine textil bewehrte Kunstharzbeschichtung (43,45,47) umfasst, welche Noppenfolie mit den Deckflächen an der äusseren Wandung anliegt und welche Kunstharzbeschichtung auf der Seite der Noppenfolie ausgebildet ist, auf welcher die Talsohle einen konvexen Grat (21) bildet.

10. Tank gemäss Anspruch 9, **dadurch gekennzeichnet, dass** die textil bewehrte Kunstharzbeschichtung (45) aus einem mindestens 2-schichtigen Glasfasergewebe besteht.

11. Tank nach Anspruch 10, **dadurch gekennzeichnet, dass** die Fasern der ersten Schicht der Glasfasergewebe mit einer Schlichte, vorzugsweise einer Silan-Schlichte, behandelt sind, und die Fasern der zweiten Schicht unbehandelt sind.

12. Verfahren zur Herstellung einer Noppenfolie (11), bei welchem eine Metallfolie mit zwei zusammenwirkenden Prägewalzen geprägt wird, **dadurch gekennzeichnet, dass** die erste Prägewalze positive pyramidenstumpfähnliche Erhöhungen aufweist, die in sich kreuzenden Reihen angeordnet sind und zwischen sich ein Kreuzraster von Tälern (21) bilden, und die zweite Prägewalze ein dem Kreuzraster der Täler entsprechendes Kreuzraster von Gräten aufweist, und die Metallfolie mit einem Prägedruck zwischen den Walzen geprägt wird, der so bemessen ist, dass die Metallfolie durch die Gräte und die pyramidenstumpfähnlichen Erhöhungen dreidimensional gezogen wird, wobei die Metallfolie während des gesamten Prägeprozesses in Abstand zur Talsohle der Täler (21) bleibt.

## Claims

1. A nubbed film with crossing rows of nubs (13) and with a cross-pattern of troughs (21) between the rows, **characterised in that** the trough bottom at least of the troughs directed in one direction has a wave shape in the longitudinal extension of the trough (21), said wave shape at the trough crossings (23) having a peak (33) and a lowest point (31) between these trough crossings.

2. A nubbed film according to claim 1, **characterised in that** the trough bottom at the trough crossings (23) has a larger trough bottom radius than between the trough crossings (23).

3. A nubbed film according to claim 1 or 2, **characterised in that** the nubs (13) are similar to a truncated pyramid, the nubbed film (11) in each case forms the top surface (15), the pyramid edges (19) and the side surfaces (17) and thus also forms the cross-pattern of the troughs (21), and that the pyramid edges (19) on the base of the truncated pyramids have an edge radius of at least 1/5 of the pattern dimension of the cross-pattern

4. A nubbed film according to claim 3, **characterised in that** the edge radius is between 1/5 and 2/5 of the pattern dimension.

5. A nubbed film according to one of the claims 1 to 4, **characterised in that** in a cross section diagonally to the cross-pattern and through the crossing locations (23) of the cross-pattern, the section surface of the nubbed film (11) follows a non-liner function curve which forms an apex point (33) at the crossing location (23).

6. A nubbed film according to one of the claims 1 to 5, **characterised in that** the top surface (15) is square.

7. A nubbed film according to one of the claims 1 to 6, **characterised in that** the cross pattern is a square pattern.

8. A nubbed film according to one of the claims 1 to 7, **characterised in that** the pyramid edges (19) bordering the top surface (19) are designed in a more angular manner than bordering the base of the truncated pyramids.

9. A tank with an outer wall (15) and with a tank interior lining, said tank interior lining comprising a nubbed film (11) according to one of the preceding claims, and a textile-armoured artificial resin coating (43, 43, 47), said nubbed film bearing with the top surfaces on the outer wall, and said artificial resin coating being formed on the side of the nubbed film, on which the trough bottom forms a convex ridge (21).

10. A tank according to claim 9, **characterised in that** the textile-armoured artificial resin coating (45) consists of a glass fibre fabric which is at least two-layered.

11. A tank according to clam 10, **characterised in that** the fibres of the first layer of the glass fibre fabric are treated with a size, preferably a silane size, and the fibres of the second layer are untreated.

12. A method for manufactured a nubbed film (11) with which a metal film is embossed with two cooperating embossing rollers, **characterised in that** the first embossing roller comprises positive truncated-pyramid-like raisings which are arranged in crossing rows and between them form a cross-pattern of troughs (21), and the second embossing roller has a cross-pattern of ridges, said cross pattern corresponding the cross-pattern of troughs, and the metal film is embossed with an embossing pressure between the rollers, which is dimensioned such that metal film is drawn through the ridges and the truncated-pyramid-like raisings in a three-dimensional manner, wherein the metal film remains at a distance to the trough bottom of the troughs (21) during the complete embossing process.

## Revendications

1. Feuille à nopes (11) avec des rangées qui se croisent de nopes (13) et avec une trame croisée de creux (21) entre les rangées, **caractérisée en ce que** le fond des creux au moins des creux orientés dans un sens possède, dans le sens de la longueur du fond (21), une forme ondulée qui possède un point culminant (33) aux croisements des creux (23) et un point bas (31) entre ces croisements des creux.

2. Feuille à nopes selon la revendication 1, **caractérisée en ce que** le fond des creux présente un plus grand rayon de fond des creux aux croisements des creux (23) qu'entre les croisements des creux (23).

3. Feuille à nopes selon la revendication 1 ou 2, **caractérisée en ce que** les nopes (13) sont semblables à des pyramides tronquées, la feuille à nopes (11) forme respectivement la surface de couverture (15), les arêtes des pyramides (19) et les faces latérales (17) et donc également la trame croisée des creux (21) et que les arêtes des pyramides (19) présentent, à la base des pyramides tronquées, un rayon d'arête d'au moins 1/5 de la dimension de trame de la trame croisée.

4. Feuille à nopes selon la revendication 3, **caractérisée en ce que** le rayon d'arête présente entre 1/5 et 2/5 de la dimension de trame.

5. Feuille à nopes selon l'une des revendications 1 à 4, **caractérisée en ce que**, dans une section en diagonale par rapport à la trame croisée et par les points de croisement (23) de la trame croisée, la surface de coupe de la feuille à nopes (11) suit une courbe de fonction non linéaire, laquelle courbe de fonction forme un sommet (33) au point de croisement (23).

6. Feuille à nopes selon l'une des revendications 1 à 5, **caractérisée en ce que** la surface de couverture (15) est carrée.

7. Feuille à nopes selon l'une des revendications 1 à 6, **caractérisée en ce que** la trame croisée est une trame carrée.

8. Feuille à nopes selon l'une des revendications 1 à 7, **caractérisée en ce que** les arêtes des pyramides (19) sont configurées plus vives au voisinage de la surface de couverture (19) qu'au voisinage de la base des pyramides tronquées.

9. Citerne avec une paroi extérieure (51) et un revêtement de l'intérieur de la citerne, lequel revêtement de l'intérieur de la citerne comprend une feuille à nopes (11) selon l'une des revendications précédentes et une enduction de résine synthétique renforcée par du textile (43, 45, 47), laquelle feuille à nopes adhère avec les surfaces de couverture à la paroi extérieure et laquelle enduction de résine synthétique est configurée sur le côté de la feuille à nopes sur lequel le fond des creux forme une crête convexe (21).

10. Citerne selon la revendication 9, **caractérisée en ce que** l'enduction de résine synthétique renforcée par du textile (43, 45, 47) est constituée par un tissu en fibres de verre au moins en 2 couches.

11. Citerne selon la revendication 10, **caractérisée en ce que** les fibres de la première couche du tissu en fibres de verre sont traitées avec un enduit, de préférence un enduit de silane, et les fibres de la seconde couche ne sont pas traitées.

12. Procédé pour la fabrication d'une feuille à nopes (11) pour lequel une feuille de métal est gaufrée avec deux cylindres de gaufrage qui coopèrent l'un avec l'autre, **caractérisé en ce que** le premier cylindre de gaufrage présente des rehaussements positifs semblables à des pyramides tronquées qui sont placés en rangées qui se croisent et qui forment entre eux une trame croisée de creux (21) et que le second cylindre de gaufrage présente une trame croisée de crêtes qui correspond à la trame croisée de creux et la feuille de métal est gaufrée avec un gaufrage entre les cylindres qui est dimensionné tel que la feuille de métal est tirée à trois dimensions à travers les crêtes et les rehaussements positifs semblables à des pyramides tronquées, la feuille de métal restant espacée du fond de creux des creux (21) pendant tout le processus de gaufrage.
